# EUROPEAN PATENT SPECIFICATION

(11) **EP 3 629 745 B1**
(45) Date of publication and mention of the grant of the patent: **21.12.2022**
(21) Application number: 18731299.6
(22) Date of filing: 24.05.2018
(51) Int. Cl.: A21B 3/13

(54) **A BLANK FOR FORMING A MOLD**
EINE FALTVORLAGE ZUM BILDEN EINER BACKFORM
UN MODÈLE À PLIER POUR FAIRE UN MOULE DE CUISSON

(30) Priority: 26.05.2017 US 201762511556 P
(43) Date of publication of application: 08.04.2020
(60) Divisional application: 22197221.9
(73) Proprietor: Intercontinental Great Brands LLC, East Hanover, NJ 07936 (US)
(72) Inventor: SMITH, Jennifer, East Hanover, NJ 07936 (US)
(74) Representative: Boult Wade Tennant LLP
(86) International application number: PCT/US2018/034440
(87) International publication number: WO 2018/218050

(56) References cited:
- WO-A1-2006/066349
- DE-U1-202007 015 560

## Description

### FIELD

The disclosure relates generally to a blank for forming a mold and a method of forming a mold from the blank.

### BACKGROUND OF THE INVENTION

Traditionally, desserts such as cakes are prepared in metallic or glass baking dishes having a cavity for receiving the cake batter. Prepackaged mixes used to prepare a cake batter have substantially reduced the effort and materials required by a consumer to prepare a cake. To further accommodate a consumer, some of these prepackaged cake mixes, in particular for cakes that do not require cooking, i.e. cheesecake, mousse, etc, even provide a mold or dish within which the food may be prepared. The mold typically included is formed from a plastic material. Although suitable for its intended purpose, these plastic molds are rigid and therefore require a substantial amount of space within the package. In some instances, the size of the packaging is increased to accommodate storing the mold therein.

Accordingly, there is a desire, not only to reduce the total amount of space occupied by the mold within the package, but also to reduce the overall size of the package, and the material used to form the package. In addition, a reduction in the size of the mold and therefore the package, may decrease the environmental impact while increasing the shipping efficiency of the package.

WO-A-2006/066349 describes a mold which has a base and a collar having a continuous wall upstanding from the base. The collar includes tabs which extend from the lower edge and retaining means which retain the tabs in relation to the base so as to retain the lower edge of the collar in proximity with the base.

DE-A-202007015560 describes a blank for a foldable cake pan which has a bottom and a peripheral wall. The peripheral wall is a one piece strip and a peripheral wall section is connected to the bottom via a fold line designed as a scoring line.

### BRIEF DESCRIPTION OF EMBODIMENTS OF THE INVENTION

According to the invention, a blank for forming a mold is provided, comprising: a generally elongated primary member including at least one area for receiving a support member, a first end and a second opposite end, said first and second ends being configured to couple to one another; and at least one support member configured to affix to the at least one area of the primary member to provide structural support to the primary member at a desired area, wherein the generally elongated primary member in combination with the at least one support member forms a sidewall of the mold when affixed to the at least one area, wherein the blank is maintained in a ready-to-use configuration when said at least one support member is affixed to said primary member at said at least one area; and further wherein the primary member is formed having at least one crease, that said at least one area for receiving a support member is substantially aligned with, or in overlapping arrangement with, the at least one crease, that the support member is positioned directly adjacent the at least one crease so as to oppose a bias of said primary member and the length of the support member, measured parallel to the longitudinal axis L of the primary member, is generally larger than the crease; characterised in that the blank is transformable into a stowed configuration by folding the blank about the at least one crease.

According to another embodiment, there is provided a method of forming a mold from the above mentioned blank in its stored configuration, comprising: unfolding said blank about said at least one crease; connecting said first end and said second end of said primary member; and affixing said at least one support member to said at least one area for receiving a support member.

These embodiments and other examples not belonging to the invention are described in detail below.

### BRIEF DESCRIPTION OF THE DRAWINGS

The accompanying drawings incorporated in and forming a part of the specification embodies several aspects of the present disclosure and, together with the description, serves to explain the principles of the present disclosure. In the drawings:
FIG. 1 is a perspective view of a ready-to-use mold positioned on a support surface according to an embodiment;
FIG. 2 is a perspective view of the transformable mold of FIG. 1 in a an un folded configuration according to an embodiment;
FIG. 3 is a plan view of the transformable mold of FIG. 1 during transformation between an unfolded configuration and a ready-to-use configuration;
FIG. 4A is a plan view of a support member of the transformation mold according to an embodiment;
FIG. 4B is a plan view of a support member assembled to the primary member according to an embodiment;
FIG. 4C is a plan view of an opposite side of the support member assembled to the primary member of FIG. 4B according to an embodiment;
FIG. 5 is a plan view of a mold in a ready-to-use configuration according to an embodiment;
FIG. 6 is a plan view of a blank in a stowed configuration according to an embodiment; and
FIG. 7 is a plan view of a blank in a partially unfolded configuration according to an embodiment.

The detailed description explains embodiments of the invention, together with advantages and features, by way of example with reference to the drawings.

### DETAILED DESCRIPTION OF THE INVENTION

Referring now to the FIGS., an example of a mold is illustrated. The mold illustrated and described herein may be used during the preparation of a consumable edible item, such as a cake for example. However, it should be understood that the mold may be suitable for use in other applications.

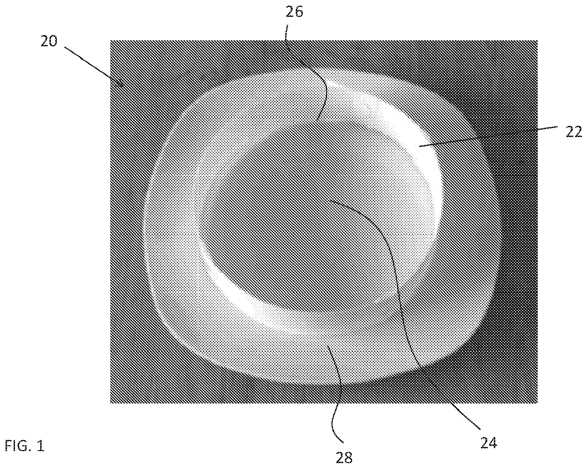

A ready-to-use mold 20, shown in FIG. 1, includes a side wall 22 defining a hollow interior cavity 24. In the illustrated, non-limiting embodiment, the mold 20 is generally circular in shape. However, a mold having another shape is also contemplated herein. In use, an edge 26 of the sidewall 22 is positioned in contact with a support surface 28 selected by a user. The support surface 28 may be defined by a plate (as shown in FIG. 1), baking sheet, or other suitable food-safe component. The support surface 28 abuts the edge 26 of the mold 20 about the periphery of the side wall 22 such that the support surface 28 functions as a base of the mold 20, thereby sealing an end of the hollow cavity 24. Accordingly, when the mold 20 is positioned adjacent a support surface, as shown in the FIG., the sidewall 22 and the support surface 28 cooperate to contain a formable edible material within the hollow cavity 24. As used herein, the term "formable material" is understood to include flowable materials, such as cake batter, as well as powdered materials, crumb like structures, and larger solids for example.

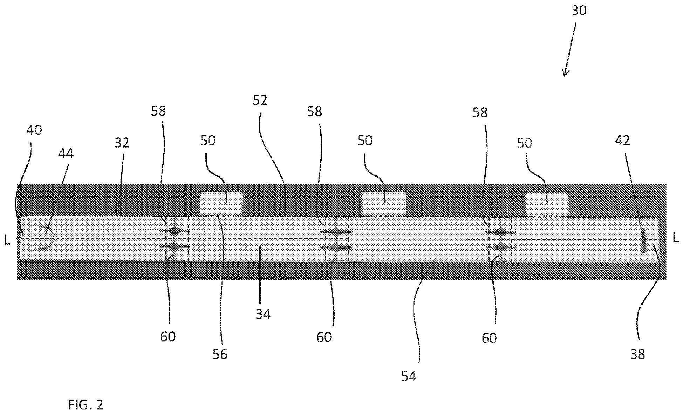

The mold 20 is formed by transforming a blank indicated generally at 30 in FIG. 2. The blank 30 may be made from any suitable material, including, but not limited to paper board. At least one surface of the blank 30 includes a food-safe material. In an embodiment, both a first surface and a second, opposite surface of the blank 30 are formed from a food-safe material. The food safe material may be integrated into the paper board, or alternatively, may be applied as a coating. The food-safe material may additionally include non-stick properties to allow the mold 30 to be easily removed from the food item after preparation thereof. In an embodiment, the food-safe, non-stick surface may be provided in the form of a lamination of aluminum foil, wax, or another non-stick coating. In embodiments where the food prepared within the mold 30 requires cooking, i.e. application of heat, both the blank 30 and the support surface 28 associated therewith are formed from suitable materials, such as microwave safe materials for example. In an embodiment, the first surface of the blank 30 intended to contact the formable material includes a coating that prevents or hinders the absorption of liquid into the material of the blank 30. However, embodiments where both the first surface and the second surface include such a coating are also contemplated herein.

With reference now to FIGS. 2-5, the blank 30 is illustrated in more detail. The blank 30 includes a generally elongated primary member 32 which in combination with one or more support members 50 (described in more detail below) forms the sidewall 22 of the mold 20. In the illustrated embodiment, the primary member 32 is rectangular in shape and has first and second major surfaces 34, 36, defined by a length and height of the primary member. The length may be selected to achieve a mold 20 having a cavity 24 of a desired dimension and the height is selected to extend beyond an upper surface of a formable material positioned within the cavity 24. However, other configurations of the primary member 32 are also contemplated herein.

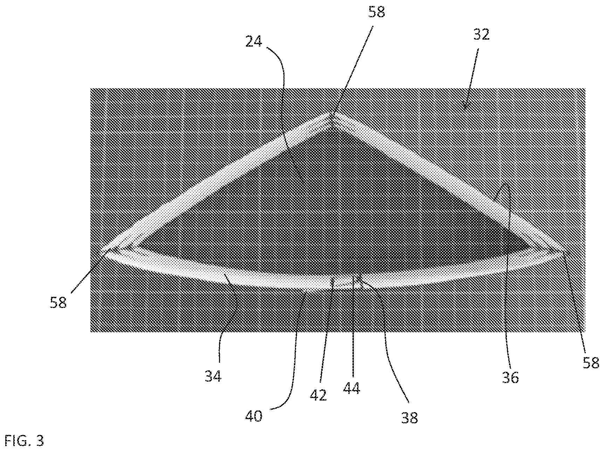

A first end 38 of the primary member 32 and a second, opposite end 40 of the primary member 32 are configured to couple to one another. In an embodiment, a first engagement member 42 is arranged adjacent the first end 38 and a second engagement member 44 is arranged adjacent the second end 40. The first and second engagement members 42, 44 are generally complementary to one another and cooperate to retain the primary member 32 in a configuration where that the cavity 24 of the mold 20 is defined by the first surface 34 of the primary member 32 (see FIG. 3).

The first and second engagement members 42, 44 may be operable to removably couple the first and second ends 38, 40, as shown in the FIGS., or alternatively, may be configured to permanently couple the ends 38, 40. According to the invention, the first and/or second engagement members 42, 44 is configured to be affixed to a surface of the primary member 32, or not according to the invention, may be formed directly into the body of primary member 32. In the illustrated embodiment, one of the first engagement member 42 and the second engagement member 44 includes an opening, such as a slot for example, formed in the primary member 32, and the other of the first engagement member 42 and the second engagement member 44 includes a tab receivable within the opening. It should be understood that any combination of first and second engagement members 42, 44 capable of affixing the ends 38, 40 of the primary member 32 is within the scope of the disclosure.

The blank 30 additionally includes one or more support members 50. In the illustrated embodiment, three support members 50 are shown; however it should be understood that unclaimed embodiments having any number of support members are within the scope of the disclosure. As shown the one or more support members 50 may be attached to a portion of the primary member 32, such as to a first edge 52, or a second opposite edge 54 for example. The interface between the one or more support members 50 and the primary member 32 may be scored or perforated. As a result, the one or more support members 50 are easily separable from the primary member 32 along the perforated interface 56 without causing damage to either the support members 50 or the primary member 32. However, embodiments where the support members 50 are located separate from the primary member 32 are also contemplated herein.

Each of the one or more support members 50 is configured to mount to a portion of the primary member 32 to provide structural support to the primary member 32 at a desired area. In an embodiment, the areas for receiving a support member, illustrated schematically at 58 are arranged at locations where the rigidity of the primary member 32 along a longitudinal axis L, oriented parallel to the length of the primary member 32, is weakened or compromised. In the illustrated embodiment, the primary member 32 of the blank 30 is formed having one or more folds or creases 60 formed therein. As shown, the primary member 32 includes three creases, formed substantially equidistantly along the length of the primary member 32. However, embodiments having any number of creases 60 formed at any position are contemplated herein. Each of the creases 60 creates a bias in the contour of the primary member 32 when the first and second ends 38, 40 of the primary member 32 are coupled (FIG. 3). According to the invention, the one or more areas for receiving a support member 58 may be substantially aligned with, or in overlapping arrangement with the at least one crease 60.

In the illustrated embodiment, each of the support members 50 is generally rectangular in shape and has a height substantially equal to a height of the primary member. As shown, the corners of the support members 50 may be rounded to increase the ease of assembly, thereby reducing overall assembly time and potential user frustration. By forming the support members 50 with a substantially uniform shape, the support members 50 may be mounted to the primary member 32 in a variety of configurations (i.e. right side up, right side down etc...). In addition, and according to the invention, the length of the support member 50, measured parallel to the longitudinal axis L of the primary member 32, is generally larger than the crease 60. As a result, when the support member 50 is connected to the primary member 32 at an area for receiving a support member 58, the support member 50 generally overlaps a portion of the primary member 32 on both sides of the crease 60. By positioning the support member 50 directly adjacent the crease 60, the rigidity of the primary member 32 at the area for receiving a support member 58, and more particularly at the crease 60, is improved. As a result, the support member 50 may counteract or overcome the bias created in the contour of the primary member 32 formed by the crease 60. It should be understood that support members 50 of another size and shape are also contemplated herein. It should also be understood that both the support member 50 and the area for receiving the support member 58 may vary in proportion to the primary member 32 based on the flexibility of the materials being used.

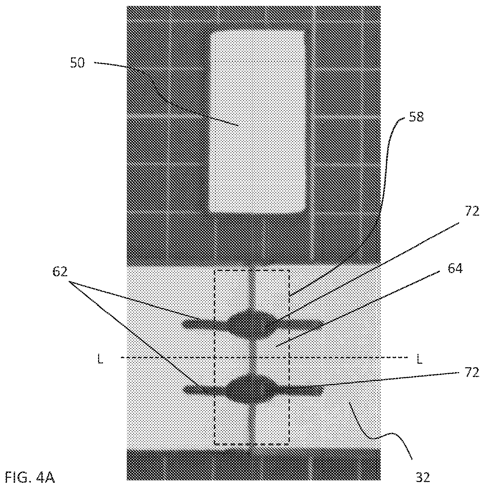

In an unclaimed embodiment, the one or more support members 50 may be permanently affixed to the primary member 32, such as with an adhesive for example, at the areas for receiving a support member 58. Alternatively, the one or more support members 50 may be removably connected to the primary member 32. For example, one or more slots 62 may be formed at each area for receiving a support member 58. In the illustrated, non-limiting embodiment of FIG. 4A, multiple slots 62, oriented parallel to the longitudinal axis L, are formed in the primary member 32 at each area for receiving a support member 58 to define a retaining body 64 extending generally perpendicular to the crease 60. The retaining body 64 is configured to cooperate with the adjacent portion of the primary member 32 to restrict movement of the support member 50 relative to the primary member 32.

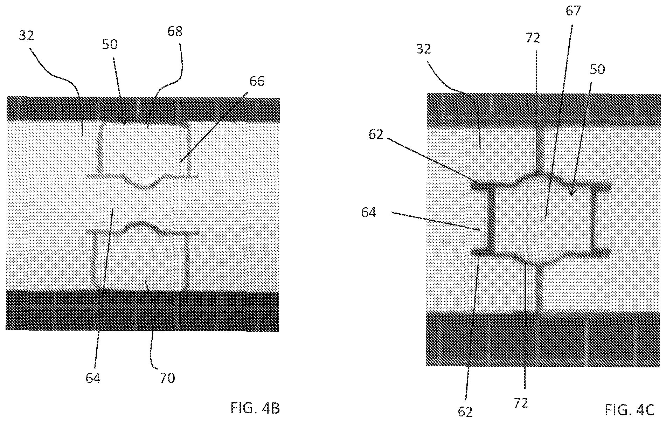

As shown in FIG. 4B, the support member 50 is insertable through the slots 62 formed in the primary member 32 such that the retaining body 64 is disposed adjacent a first surface 66 of the support member 50 and the body of the primary member 32 is arranged adjacent second, opposite surface 67(FIG. 4C) of the support member 50. Alternatively, in embodiments having a single slot 62 formed at each area for receiving a support member 58, the support member 50 may extend through the slot 62 such that a first end 68 of the support member 50 is arranged adjacent a first surface 34 of the primary member 32 and a second end 70 of the support member 50 is arranged adjacent the second, opposite surface 36 of the primary member 32. However, any mechanism or configuration suitable for coupling the support member 50 to the primary member 32 is within the scope of the disclosure.. In the illustrated, non-limiting embodiment, an opening 72 is formed in the primary member 32 adjacent each slot 62 to increase the ease of assembling the support members 50 to the primary member 32.

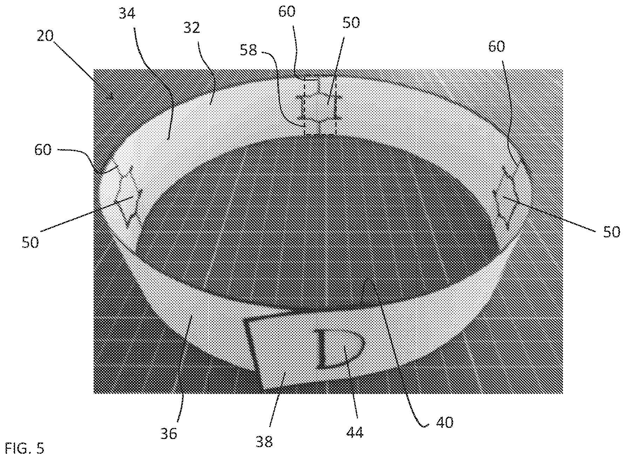

When the first and second ends 38, 40 of the primary member 32 are connected and each of the plurality of support members 50 is mounted to the primary member 32 at an area for receiving a support member 58, as shown in FIG. 5, a ready-to-use mold 20 is formed from the blank 30. It should be understood that when transforming the blank 30 to a ready to use mold 20, the at least one support member 50 may be coupled to area for receiving a support member 58 and then the first and second ends 38, 40 of the primary member 32 may be coupled. Alternatively, the first and second ends 38, 40 of the primary member 32 may be coupled prior to installation of the one or more support members 50.

When the first and second ends 38, 40 of the primary member 32 are coupled without any support members 50 connected thereto, the primary member 32 forms a first shape. Although the first shape has an equal stress, the first shape is distinguishable from a second shape of the primary member 32 formed by a natural equal stress. The second shape formed by a natural equal stress occurs when there are no weaknesses (i.e. folds or creases 60) in the primary member 32. Inclusion of the support members 50 at the creases 60 overcomes these weaknesses, such that when the first and second ends 38, 40 of the primary member 32 are coupled, the primary member 32 takes the second shape of natural equal stress.

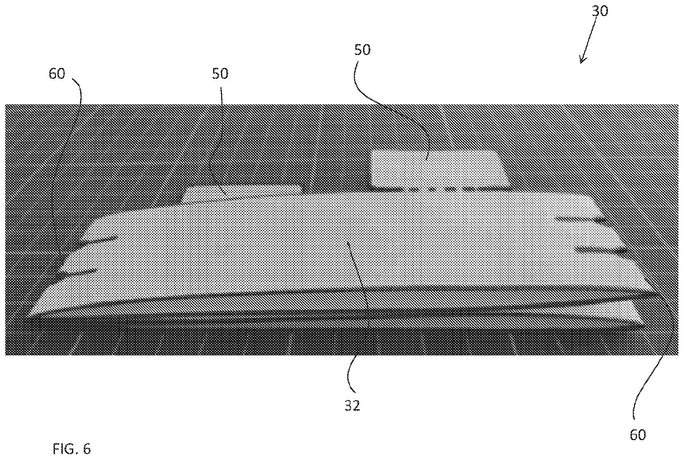

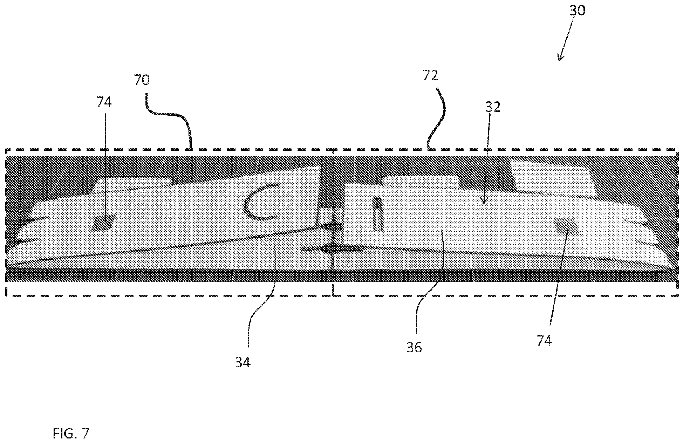

With reference now to FIGS. 6 and 7, the blank 30 may be adapted for storage within a container or package (not shown) substantially smaller than the blank 30. The blank 30 may be transformed into a "stowed" configuration by folding the blank 30 about the one or more creases 60 formed within the primary member 32. Accordingly, the positioning and total number of creases 60 formed in the blank 30 will vary based not only on the size of the desired ready to use mold 30, but also on the size of the packaging within which the blank 30 may be arranged.

An example of the blank 30 in a stowed configuration is illustrated in FIG. 6. In the stowed configuration, the primary member 32 of the blank 30 has been folded at each of the three creases 60 formed therein. In the stowed configuration, the length of the blank 30 is about a quarter of the length in an unfolded configuration (FIG. 2). As shown, the primary member 32 is folded about the crease 60 located adjacent the first end 38 and the crease 60 adjacent the second end 40 (see FIG. 7). Both folds are formed in a direction such that the first surface 34 of the primary member 32, such as the surface including the food safe and/or non-stick materials for example, is folded on top of itself. In the partially folded configuration of FIG. 7, the blank 30 is formed into a first half 70 and a second half 72. To transform the blank 30 from the partially folded to a stowed configuration, the partially folded blank 30 is additionally folded about a central crease 60 to position the first half 70 in overlapping alignment with the second half 72. In an embodiment, an adhesive 74 or another coupling mechanism may be arranged on the surface 36 of primary member 32 of at least one of the first half 70 and/or the second half 72 to retain the blank 30 in the stowed configuration. By folding the blank 30 such that the surface having the coating to prevent liquid absorption onto is in contact with itself, the adhesive or coupling mechanism 74 may be positioned on the second, opposite surface.

To transform the blank 30 from the stowed configured to a ready-to-use mold 20, a user must perform at least one unfolding operation, such as a first unfolding operation and a second unfolding operation, to achieve a blank in an unfolded configuration (FIG. 2). Once unfolded, the support members 50 must be attached to the primary member 32 at an area for receiving a support member 58, and the ends 38, 40 of the primary member 32 must be coupled to form a mold 20. The mold 20 may then be positioned adjacent any desired support surface 28 for use. As described herein, it should be understood that the blank 30 may be transformed from a stowed configuration into a ready-to-use mold 20 without requiring the use of additional materials or tools.

The mold 20 illustrated and described herein easy to assemble and disassemble and may be reusable. Further, because the mold is able to transition between a stowed configuration and a ready-to-use, the mold requires substantially less space in a package than conventional thermoplastic molds.

The use of the terms "a" and "an" and "the" and similar referents in the context of describing the invention (especially in the context of the following claims) are to be construed to cover both the singular and the plural, unless otherwise indicated herein or clearly contradicted by context. Further, it should be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A blank (30) for forming a mold (2) comprising:
a generally elongated primary member (32) including at least one area (58) for receiving a support member (50), a first end (38) and a second opposite end (40), said first and second ends (38, 40) being configured to couple to one another; and
at least one support member (50) configured to affix to the at least one area (58) of the primary member (32) to provide structural support to the primary member (32) at a desired area, wherein the generally elongated primary member (32) in combination with the at least one support member (50) forms a sidewall (22) of the mold (20) when affixed to the at least one area (58),
wherein the blank (30) is maintained in a ready-to-use configuration when said at least one support member (50) is affixed to said primary member (32) at said at least one area (58);
and further wherein the primary member (32) is formed having at least one crease (60), that said at least one area (58) for receiving a support member (50) is substantially aligned with, or in overlapping arrangement with, the at least one crease, that the support member (50) is positioned directly adjacent the at least one crease (60) so as to oppose a bias of said primary member and the length of the support member (50), measured parallel to the longitudinal axis L of the primary member (32), is generally larger than the crease (60);
**characterised in that** the blank (30) is transformable into a stowed configuration by folding the blank (30) about the at least one crease (60).

2. The blank (30) of claim 1, wherein said at least one support member (50) is connected to said primary member (32) via a perforated interface (56).

3. The blank (30) of claim 1, wherein said at least one support member (50) is separated from said primary member (32) before said at least one support member (50) is affixed to a second area (58).

4. The blank (30) of claim 1, wherein the blank (30) is transformable to said ready-to-use configuration by connecting a first end (38) and a second end (40) of said primary member (32) and by mounting said at least one support member (50) at a second area (58).

5. The blank (30) of claim 1, wherein the blank (30) is formed from a paper board.

6. The blank (30) of claim 1, wherein a first surface of the blank (30) includes a food-safe material.

7. A method of forming a mold (20) from the blank of claim 1 in its stored configuration, comprising:
unfolding said blank (30) about said at least one crease (60);
connecting said first end (38) and said second end (40) of said primary member (32); and
affixing said at least one support member (50) to said at least one area (58) for receiving a support member (50) .

8. The method of claim 7, wherein said desired shape is a generally continuous curve.

9. The method of claim 7, wherein said primary member (32) and said at least one support member (50) are separate from one another.

10. The method of claim 7, wherein said first end (38) includes a first engagement member (42) and said second end (40) includes a second engagement member (44), said connecting said first end (38) and said second end (40) further comprises connecting said first engagement member (42) and said second engagement member (44).

11. The method of claim 7, wherein affixing said at least one support member (50) to said at least one area (58) for receiving a support member (50) includes inserting said at least one support member (50) through a slot formed in said at least one area (58) for receiving a support member (50).

12. The method of claim 7, wherein said at least one area (58) for receiving a support member (50) includes a fold line (60) configured to bias said primary member (32) into a first shape.

13. The method of claim 7, further comprising positioning the mold (20) adjacent a support surface (28) to define a cavity (24) for retaining a formable material.

## Patentansprüche

1. Faltvorlage (30) zum Bilden einer Backform (2), umfassend:
ein im Allgemeinen längliches Primärelement (32), das mindestens einen Bereich (58) zur Aufnahme eines Stützelements (50), ein erstes Ende (38) und ein zweites gegenüberliegendes Ende (40) einschließt, wobei das erste und zweite Ende (38, 40) dafür konfiguriert sind, miteinander gekoppelt zu werden; und
mindestens ein Stützelement (50), das dafür konfiguriert ist, in dem mindestens einen Bereich (58) des Primärelements (32) befestigt zu werden, um dem Primärelement (32) in einem gewünschten Bereich strukturelle Unterstützung bereitzustellen, wobei das im Allgemeinen längliche Primärelement (32) in Kombination mit dem mindestens einen Stützelement (50) eine Seitenwand (22) der Backform (20) bildet, wenn es in dem mindestens einen Bereich (58) befestigt ist,
wobei die Faltvorlage (30) in einer gebrauchsfertigen Konfiguration gehalten wird, wenn das mindestens eine Stützelement (50) in dem mindestens einen Bereich (58) an dem Primärelement (32) befestigt ist;
und wobei ferner das Primärelement (32) mit mindestens einer Knickfalte (60) gebildet ist, der mindestens eine Bereich (58) zur Aufnahme eines Stützelements (50) im Wesentlichen mit der mindestens einen Knickfalte ausgerichtet oder mit dieser überlappend angeordnet ist, das Stützelement (50) direkt neben der mindestens einen Knickfalte (60) positioniert ist, um einer Vorspannung des Primärelements entgegenzuwirken, und die Länge des Stützelements (50), parallel zur Längsachse L des Primärelements (32) gemessen, im Allgemeinen größer als die Knickfalte (60) ist;
**dadurch gekennzeichnet, dass** die Faltvorlage (30) durch Falten der Faltvorlage (30) um die mindestens eine Knickfalte (60) in eine verstaute Konfiguration umgewandelt werden kann.

2. Faltvorlage (30) nach Anspruch 1, wobei das mindestens eine Stützelement (50) über eine perforierte Schnittstelle (56) mit dem Primärelement (32) verbunden ist.

3. Faltvorlage (30) nach Anspruch 1, wobei das mindestens eine Stützelement (50) von dem Primärelement (32) getrennt wird, bevor das mindestens eine Stützelement (50) in einem zweiten Bereich (58) befestigt wird.

4. Faltvorlage (30) nach Anspruch 1, wobei die Faltvorlage (30) durch Verbinden eines ersten Endes (38) und eines zweiten Endes (40) des Primärelements (32) und durch Anbringen des mindestens einen Stützelements (50) in einem zweiten Bereich (58) in die gebrauchsfertige Konfiguration umgewandelt werden kann.

5. Faltvorlage (30) nach Anspruch 1, wobei die Faltvorlage (30) aus einer Pappe gebildet ist.

6. Faltvorlage (30) nach Anspruch 1, wobei eine erste Oberfläche der Faltvorlage (30) ein lebensmittelechtes Material enthält.

7. Verfahren zum Bilden einer Backform (20) aus der Faltvorlage nach Anspruch 1 in seiner verstauten Konfiguration, umfassend:
Entfalten der Faltvorlage (30) um die mindestens eine Knickfalte (60);
Verbinden des ersten Endes (38) und zweiten Endes (40) des Primärelements (32); und
Befestigen des mindestens einen Stützelements (50) in dem mindestens einen Bereich (58) zur Aufnahme eines Stützelements (50).

8. Verfahren nach Anspruch 7, wobei die gewünschte Form eine im Allgemeinen kontinuierliche Kurve ist.

9. Verfahren nach Anspruch 7, wobei das Primärelement (32) und das mindestens eine Stützelement (50) voneinander getrennt sind.

10. Verfahren nach Anspruch 7, wobei das erste Ende (38) ein erstes Eingriffselement (42) einschließt und das zweite Ende (40) ein zweites Eingriffselement (44) einschließt, wobei das Verbinden des ersten Endes (38) und zweiten Endes (40) ferner das Verbinden des ersten Eingriffselements (42) und zweiten Eingriffselements (44) umfasst.

11. Verfahren nach Anspruch 7, wobei das Befestigen des mindestens einen Stützelements (50) in dem mindestens einen Bereich (58) zur Aufnahme eines Stützelements (50) das Einführen des mindestens einen Stützelements (50) durch einen Schlitz einschließt, der in dem mindestens einen Bereich (58) zur Aufnahme eines Stützelements (50) gebildet ist.

12. Verfahren nach Anspruch 7, wobei der mindestens eine Bereich (58) zur Aufnahme eines Stützelements (50) eine Faltlinie (60) einschließt, die dafür konfiguriert ist, das Primärelement (32) in eine erste Form vorzuspannen.

13. Verfahren nach Anspruch 7, ferner umfassend das Positionieren der Backform (20) neben einer Stützoberfläche (28), um einen Hohlraum (24) zum Halten eines formbaren Materials zu definieren.

## Revendications

1. Ébauche (30) destinée à former un moule (2) comprenant :
un élément primaire généralement allongé (32) incluant au moins une zone (58) pour recevoir un élément de support (50), une première extrémité (38) et une seconde extrémité opposée (40), lesdites première et seconde extrémités (38, 40) étant conçues pour s'accoupler l'une à l'autre ; et
au moins un élément de support (50) conçu pour se fixer à l'au moins une zone (58) de l'élément primaire (32) afin de fournir un support structural à l'élément primaire (32) au niveau d'une zone souhaitée, dans laquelle l'élément primaire généralement allongé (32) en combinaison avec l'au moins un élément de support (50) forme une paroi latérale (22) du moule (20) lorsqu'il est fixé à l'au moins une zone (58),
dans laquelle l'ébauche (30) est maintenue dans une configuration prête à l'emploi lorsque ledit au moins un élément de support (50) est fixé audit élément primaire (32) au niveau de ladite au moins une zone (58) ;
et dans laquelle en outre l'élément primaire (32) est formé ayant au moins un plissement (60), dans laquelle ladite au moins une zone (58) pour recevoir un élément de support (50) est sensiblement alignée avec, ou dans un agencement en chevauchement avec, l'au moins un plissement, dans laquelle l'élément de support (50) est positionné directement adjacent à l'au moins un plissement (60) de façon à s'opposer à une sollicitation dudit élément primaire et la longueur de l'élément de support (50), mesurée parallèle à l'axe longitudinal L de l'élément primaire (32), est généralement plus grande que le plissement (60) ;
**caractérisée en ce que** l'ébauche (30) est transformable en une configuration repliée en pliant l'ébauche (30) autour de l'au moins un plissement (60).

2. Ébauche (30) selon la revendication 1, dans laquelle ledit au moins un élément de support (50) est relié audit élément primaire (32) par l'intermédiaire d'une interface perforée (56).

3. Ébauche (30) selon la revendication 1, dans laquelle ledit au moins un élément de support (50) est séparé dudit élément primaire (32) avant que ledit au moins un élément de support (50) soit fixé à une seconde zone (58).

4. Ébauche (30) selon la revendication 1, dans laquelle l'ébauche (30) est transformable en ladite configuration prête à l'emploi en reliant une première extrémité (38) et une seconde extrémité (40) dudit élément primaire (32) et en montant ledit au moins un élément de support (50) au niveau d'une seconde zone (58).

5. Ébauche (30) selon la revendication 1, dans laquelle l'ébauche (30) est formée à partir d'un carton.

6. Ébauche (30) selon la revendication 1, dans laquelle une première surface de l'ébauche (30) inclut un matériau de qualité alimentaire.

7. Procédé de formation d'un moule (20) à partir de l'ébauche selon la revendication 1 dans sa configuration rangée, comprenant :
le dépliage de ladite ébauche (30) autour dudit au moins un plissement (60) ;
la liaison de ladite première extrémité (38) et de ladite seconde extrémité (40) dudit élément primaire (32) ; et
la fixation dudit au moins un élément de support (50) à ladite au moins une zone (58) pour recevoir un élément de support (50).

8. Procédé selon la revendication 7, dans lequel ladite forme souhaitée est une courbe généralement continue.

9. Procédé selon la revendication 7, dans lequel ledit élément primaire (32) et ledit au moins un élément de support (50) sont séparés l'un de l'autre.

10. Procédé selon la revendication 7, dans lequel ladite première extrémité (38) inclut un premier élément de mise en prise (42) et ladite seconde extrémité (40) inclut un second élément de mise en prise (44), ladite liaison de ladite première extrémité (38) et de ladite seconde extrémité (40) comprend en outre la liaison dudit premier élément de mise en prise (42) et dudit second élément de mise en prise (44).

11. Procédé selon la revendication 7, dans lequel la fixation dudit au moins un élément de support (50) à ladite au moins une zone (58) pour recevoir un élément de support (50) inclut l'insertion dudit au moins un élément de support (50) à travers une encoche formée dans ladite au moins une zone (58) pour recevoir un élément de support (50).

12. Procédé selon la revendication 7, dans lequel ladite au moins une zone (58) pour recevoir un élément de support (50) inclut une ligne de pliage (60) conçue pour solliciter ledit élément primaire (32) dans une première forme.

13. Procédé selon la revendication 7, comprenant en outre le positionnement du moule (20) adjacent à une surface de support (28) pour définir une cavité (24) pour retenir un matériau formable.
